# EUROPÄISCHE PATENTSCHRIFT

(11) **EP 3 147 422 B1**
(45) Veröffentlichungstag und Bekanntmachung des Hinweises auf die Patenterteilung: **11.07.2018**
(21) Anmeldenummer: 16450023.3
(22) Anmeldetag: 26.09.2016
(51) Int. Cl.: E04F 15/14

(54) **DÄMMSTREIFEN**
INSULATING STRIP
BANDES D'ISOLATION

(30) Priorität: 25.09.2015 AT 6252015
(43) Veröffentlichungstag der Anmeldung: 29.03.2017
(73) Patentinhaber: Reincke, Lars, 2840 Warth (AT)
(72) Erfinder: Reincke, Lars, 2840 Warth (AT)

(56) Entgegenhaltungen:
- DE-A1- 3 425 038
- DE-A1- 4 114 125
- DE-A1-102013 012 853
- DE-U1-202010 003 965

## Beschreibung

Die Erfindung betrifft einen Dämmstreifen, insbesondere für die Dämmung zwischen einer Estrichschicht und einer Wand, umfassend eine Dämmschicht.

Die Erfindung betrifft weiters ein Verfahren zum Aufbringen eines Bodenbelags, insbesondere eines Estrichs, wobei zwischen dem Bodenbelag und einem nicht von dem Bodenbelag zu bedeckenden Bereich, bspw. eine Wand oder eine Öffnung, ein Dämmstreifen, umfassend eine Dämmschicht, vor dem Aufbringen des Estrichs angebracht wird.

Der Schichtaufbau eines Untergrundes für Fußbodenbeläge besteht üblicherweise aus drei übereinander angeordneten Schichten:
- Einer Ausgleichsschüttung, um Unebenheiten im Untergrund auszugleichen.
- Einer Dämmungsebene, um eine Dämmung zwischen Fußbodenbelag und Untergrund bereitzustellen.
- Einer Estrichebene, die den Untergrund für den Fußbodenbelag bildet.

Weiters wird zusätzlich zwischen Bereichen mit Estrich und Bereichen, die keinen Fußbodenbelag erhalten, bspw. Wände oder Löcher, ein Dämmstreifen verlegt. Dämmstreifen sind bspw. zwischen der Estrichebene und der Wand angeordnet und stehen mit der Dämmungsebene in Kontakt. Die Aufgabe der Dämmstreifen ist die Dämmung, insbesondere die Schalldämmung zwischen der Estrichebene bzw. dem darauf angeordneten Fußbodenbelag und dem nicht mit Estrich versehenen Bereich.

Dämmstreifen sind üblicherweise aus einem Kunststoff gefertigt, bspw. Polyethylen, und sind flexibel ausgebildet. Durch die Flexibilität kommt es bei der Verlegung oftmals zu verschiedenen Fehlern und Mängeln. Beispielsweise werden die Dämmstreifen in Ecken nicht entlang der Wand, sondern in einem in den Raum hineinstehenden Bogen verlegt.

Diese Mängel führen dazu, dass nachfolgende Bautätigkeiten, bspw. das Bodenlegen oder Ausmalen, nicht ordnungsgemäß durchgeführt werden können. Daher müssen die Verlegefehler zuerst aufwendig und kostenintensiv korrigiert werden. Dies stellt eine zusätzliche zeitliche und finanzielle Belastung dar.

Ein weiterer Nachteil üblicher Dämmstreifen besteht darin, dass die Verlegung in einer konstanten Höhe schwierig ist. Baunormen schreiben vor, dass der Dämmstreifen ein gewisses Mindestmaß über den fertigen Bodenbelag vorstehen muss. Aufgrund der flexiblen Eigenschaften der Dämmstreifen wird er oftmals wellenförmig an der Wand verlegt, sodass der Dämmstreifen an einigen Stellen unterhalb des erforderlichen Mindestmaßes bleibt und an anderen Stellen weit über das Mindestmaß hinaussteht. Auch diese Fehler führen zu Mängeln, die kostenintensiv repariert werden müssen, bevor nachfolgende Arbeiten durchgeführt werden können.

Weiters sehen sich Handwerker, die nachfolgende Arbeiten durchführen (z.B. Maler), oftmals dazu verleitet, zu weit überstehende Dämmstreifen entlang der Estrichoberkante abzuschneiden. Dadurch wird der erforderliche Überstand über den Estrich nicht eingehalten und der Dämmstreifen kann seine Dämmfunktion nicht mehr ordnungsgemäß erfüllen, sodass z.B. Schallbrücken entstehen.

Bekannte Dämmstreifen mit Dämmschichten werden in der DE 41 14 125 A1, der DE 34 25 038 A1, der DE 20 2010 003965 U1 und der DE 10 2013 012853 A1 beschrieben. Es ist daher eine Aufgabe der Erfindung, die oben genannten Nachteile zu beseitigen bzw. zu minimierten. Insbesondere ist es eine Aufgabe der Erfindung, einen Dämmstreifen bereitzustellen, der einerseits sauber und fachgerecht und andererseits schnell verlegt werden kann.

Zur Lösung dieser Aufgabe sieht die Erfindung einen Dämmstreifen nach Anspruch 1 vor. Dabei wird eine flexible Dämmschicht mit einem zusätzlichen Stabilisierungselement versehen, wobei die Breite des Stabilisierungselements 15-75% der Breite der Dämmschicht beträgt. Der Dämmstreifen kann plastisch verformt werden, insbesondere manuell in die gewünschte Form gebogen werden, bspw. in eine einem Wandeckverlauf entsprechende Form. Aufgrund der Eigenschaften des Stabilisierungselements behält der Dämmstreifen seine Form. Anschließend kann der Dämmstreifen einfach und sicher an den vorgesehenen Platz angebracht werden. Dadurch wird erreicht, dass der Dämmstreifen nicht ohne weiteres verrutschen kann und eine ungewünschte Position einnimmt, welche nachher korrigiert werden müsste. Insbesondere wird ein Verdrehen bzw. eine Torsion um die Längserstreckung des Dämmstreifens verhindert und sichergestellt, dass der Dämmstreifen in seiner vorgesehenen vertikalen Ebene (z.B. entlang einer Wand) bleibt bzw. die Oberkante des Dämmstreifens einen horizontalen Verlauf beibehält und somit mit einem gleichbleibenden Abstand zur Fußbodenoberkante angeordnet werden kann. Die Folgekosten aufgrund von Reparaturen und Ausbesserungen sind dadurch erheblich reduziert.

Bevorzugt ist vorgesehen, dass das Stabilisierungselement im Wesentlichen aus einem Metall, insbesondere einem nicht gehärteten Metall, bevorzugt Aluminium besteht. Metalle sind einerseits hart genug, um die Dämmschicht in der gewünschten Position halten zu können und andererseits in dünnen Schichten flexibel genug, um ohne große Anstrengungen verformt werden zu können. Weiters sind Metalle ein bekannter Werkstoff, der vielfach eingesetzt wird und leicht erhältlich ist.

Alternativ kann vorgesehen sein, dass das Stabilisierungselement aus einem verformbaren Kunststoff besteht.

Eine bevorzugte Ausbildung sieht vor, dass das Stabilisierungselement und die Dämmschicht miteinander verklebt sind, bspw. mit einem Flüssigkleber, oder das Stabilisierungselement auf der Dämmschicht auflaminiert ist. Dadurch wird eine einfache und gleichzeitig stabile Verbindung zwischen der Dämmschicht und dem Stabilisierungselement erzielt. Bevorzugt vorgesehen ist hierbei, dass das Stabilisierungselement mit einem Klebestreifen verbunden ist, der mit der Dämmschicht verklebt ist. Beispielsweise kann der Klebestreifen schlauchförmig ausgebildet sein, wobei das Stabilisierungselement in dem schlauchförmigen Innenraum aufgenommen ist. Der Klebestreifen ist bevorzugt selbstklebend.

Weiters ist bevorzugt vorgesehen, dass das Stabilisierungselement innerhalb der Dämmschicht angeordnet ist. Dadurch wird eine besonders stabile Verbindung zwischen der Dämmschicht und dem Stabilisierungselement erzielt.

Alternativ ist vorgesehen, dass das Stabilisierungselement zwischen der Dämmschicht und einer weiteren Dämmschicht angeordnet ist.

Bevorzugt ist vorgesehen, dass das Stabilisierungselement einen durchgehenden Streifen, ein Drahtgitter, ein Lochblech oder mehrere Drähte umfasst. Je nach Anforderungsgebiet haben diese Ausführungen Vor- und Nachteile.

Weiters ist bevorzugt vorgesehen, dass die Dämmschicht aus einem insbesondere geschäumten Kunststoff, vorzugsweise Polyethylen besteht. Geschäumte Kunststoffe haben sich als Dämmmaterial vielfach bewährt und sind daher für die Verwendung in einem Dämmstreifen bestens geeignet. Die Dämmschicht weist bevorzugt eine Materialdicke von ca. 5 mm bis ca. 10 mm und eine Profilhöhe von ca. 100 mm bis ca. 180 mm auf.

In einer bevorzugten Ausführung ist vorgesehen, dass die Breite des Stabilisierungselements 25-45% der Breite der Dämmschicht beträgt. Das Stabilisierungselement soll insbesondere nicht breiter als die Dämmschicht sein und/oder soll so an der Dämmschicht angebracht sein, dass das Stabilisierungselement nicht über die Dämmschicht vorragt. Dadurch wird verhindert, dass das Stabilisierungselement sowohl mit dem Estrich als auch bspw. mit einer Wand in Berührung kommt und eine Schallbrücke ausbildet.

Weiters ist bevorzugt vorgesehen, dass das Stabilisierungselement eine Dicke von 0,3 bis 0,5 mm aufweist. Das Stabilisierungselement soll grundsätzlich so dünn wie möglich sein, um den Abstand zwischen Estrich und Wand nicht unnötig zu vergrößern. Andererseits muss die Funktion des Stabilisierungselements gewährleistet sein, vor allem darf das Stabilisierungselement beim Verformen, insbesondere Verbiegen des Dämmstreifens nicht beschädigt werden oder im schlimmsten Fall brechen.

Bevorzugt ist vorgesehen, dass das Stabilisierungselement streifenförmig mit einer Breite von 2,5 bis 5 cm, besonders bevorzugt 3 bis 5 cm, ausgebildet ist. Solche Stabilisierungselemente können besonders gut zusammen mit gängigen Dämmschichten verwendet werden. Weiters muss das Stabilisierungselement eine gewisse Mindestbreite aufweisen, um eine ausreichende Stabilität bereitstellen zu können und dadurch ein Einklappen auch bei langen Dämmstreifenabschnitten zu vermeiden.

Das Stabilisierungselement ist bevorzugt zentriert auf der Dämmschicht angeordnet, kann aber auch näher an einem Rand der Dämmschicht als am gegenüberliegenden Rand angeordnet sein.

Eine bevorzugte Ausbildung sieht vor, dass das Stabilisierungselement so an der Dämmschicht angeordnet ist, dass die Dämmschicht in Breitenrichtung zwei, jeweils ausgehend von einem Rand der Dämmschicht, von dem Stabilisierungselement freie Bereiche aufweist, wobei die freien Bereiche eine Breite von jeweils zumindest 10%, bevorzugt mindestens 20% der Breite der Dämmschicht aufweisen.

Das Stabilisierungselement bietet weiters die Möglichkeit, den Dämmstreifen mithilfe von mechanischen Befestigungsmitteln an einer Wand zu befestigen. Dadurch kann der Dämmstreifen zusätzlich gegen Verrutschen gesichert werden. Als Befestigungsmittel sind bspw. Tackernadeln, Nägel oder Schrauben geeignet. Auch Dübel können für die Befestigung verwendet werden. Das Befestigungsmittel wird durch die Dämmschicht und durch das Stabilisierungselement zur Wand geführt, sodass eine Verbindung zwischen dem Stabilisierungselement (und somit dem Dämmstreifen) und der Wand erzielt wird. Da sich die Dämmschicht nach dem Hindurchtreten des Befestigungsmittels von selbst wieder verschließt, wird das Entstehen einer Schallbrücke verhindert.

Eine bevorzugte Ausführung sieht vor, dass Messvorrichtungen, z.B. ein Temperaturfühler oder ein Feuchtigkeitsmesser mit dem Stabilisierungselement verbunden sind, um bspw. die Temperatur oder die Feuchtigkeit des Dämmstreifens zu messen. Hierbei besteht das Stabilisierungselement bevorzugt aus einem Metall, insbesondere Aluminium. Es kann auch vorgesehen sein, dass das Stabilisierungselement aus Kunststoff besteht und mehrere Metallelemente aufweist, die mit den Messgeräten zusammenwirken.

Da die Temperatur der Gebäudeaußenwände einen Einfluss auf die Raumtemperatur hat, muss die Heizungsanlage diesen Temperaturunterschied ausgleichen. Durch das Messen der Temperatur am Dämmstreifen können Wärmeveränderungen in der Gebäudeaußenwand festgestellt werden. Basierend auf diesen Messwerten kann ein gezieltes Heizen in diesen Bereichen vorgenommen werden, wodurch der Heizvorgang insgesamt sparsamer und effizienter wird (kommunikativer Heizkreislauf). Weiteres können über das Stabilisierungselement am Dämmstreifen in der Bauphase und darüber hinaus Temperaturen im Estrich aufgezeichnet werden. Speziell bei Fußbodenheizung sind diese Werte für Estrichleger, Bodenleger und den Nutzer ein wichtiges Instrument.

Über das Stabilisierungselement am Dämmstreifen kann auch der Feuchtigkeitsgehalt hinter Sockelleisten überwacht und kontrolliert werden. Basierend auf diesen Messwerten kann der Nutzer handeln, um beispielsweise der Bildung von Schimmel durch Lüften oder andere Maßnahmen entgegen zu wirken. Weiteres kann schnell und gezielt ein etwaiger Schadensfall in Nassbereichen (Küche, Bad, etc.) erkannt werden.

Die Messdaten können von der Messvorrichtung bspw. mithilfe einer Smartphone-App dem Nutzer übermittelt werden. Anhand dieser Werte kann eine Auswertungsstelle (Server, App etc.) gegebenenfalls dem Nutzer Instruktionen zur Verbesserung geben (Heizung höher drehen, Lüften, etc.). Bevorzugt sind die Messvorrichtungen direkt mit bspw. der Heizung oder einem elektrisch gesteuerten Fenster verbünden, sodass automatisch basierend auf den Messwerten die Heizung bzw. das Fenster gesteuert werden kann.

Gemäß einem weiteren Aspekt betrifft die Erfindung ein Verfahren zum Aufbringen eines Bodenbelags nach Anspruch 11. Das Verbinden des Stabilisierungselements mit der Dämmschicht kann entweder während des Herstellungsprozesses erfolgen oder am Einsatzort kurz vor der Verarbeitung. Der Dämmstreifen ist hierbei bevorzugt gemäß einer der oben genannten Ausführungen ausgebildet.

Ein weiterer Aspekt der Erfindung betrifft die Verwendung eines erfindungsgemäßen Dämmstreifens zur Schalldämmung zwischen einem Bodenbelag, insbesondere einer Estrichschicht und einem nicht vom Bodenbelag zu bedeckenden Bereich, bspw. einer Wand oder einer Öffnung. Hierbei ist bevorzugt vorgesehen, dass das Stabilisierungselement an der dem Estrich abgewandten Seite des Dämmstreifens angeordnet ist.

Ein erfindungsgemäßer Dämmstreifen kann außerdem eingesetzt werden, um Höhensprünge zwischen zwei Bereichen mit unterschiedlich dicken Belägen abzugrenzen oder um Duschtassen, Profilbauteile oder ähnliches zu dämmen.

Die Erfindung wird nachfolgend anhand eines in der Zeichnung schematisch dargestellten Ausführungsbeispiels näher erläutert. In dieser zeigen Fig. 1 eine Ansicht einer ersten erfindungsgemäßen Ausbildung, Fig. 2 eine Ansicht einer zweiten erfindungsgemäßen Ausbildung, Fig. 3 eine Seitenansicht einer erfindungsgemäßen Ausbildung und Fig. 4 eine Seitenansicht einer alternativen erfindungsgemäßen Ausbildung.

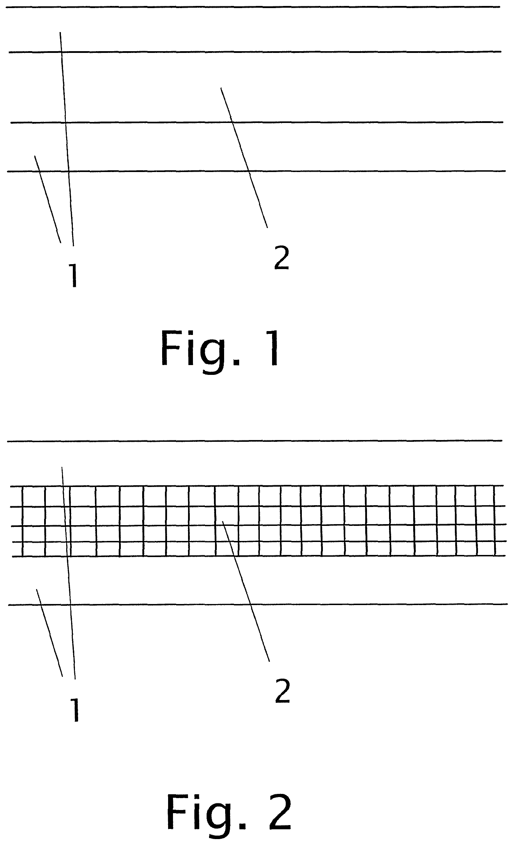

In Fig. 1 ist mit 1 eine Dämmschicht und mit 2 ein Stabilisierungselement bezeichnet, die zusammen einen Dämmstreifen bilden. Das Stabilisierungselement 2 ist mit der Dämmschicht 1 verbunden, bspw. verklebt. Die Breite der Dämmschicht 1 ist größer als die Breite des Stabilisierungselements 2, sodass das Stabilisierungselement 2 lediglich einen Teil der Dämmschicht 1 abdeckt und an beiden Seiten der Dämmschicht 1 vom Stabilisierungselement 2 freie Bereiche angeordnet sind. In dieser Ausführung ist das Stabilisierungselement 2 als durchgehender Streifen ausgebildet, bspw. aus Aluminium.

In Fig. 2 ist das Stabilisierungselement 2 schematisch als Drahtgitter dargestellt. Das Stabilisierungselement 2 kann auch bspw. in der Dämmschicht 1 integriert sein.

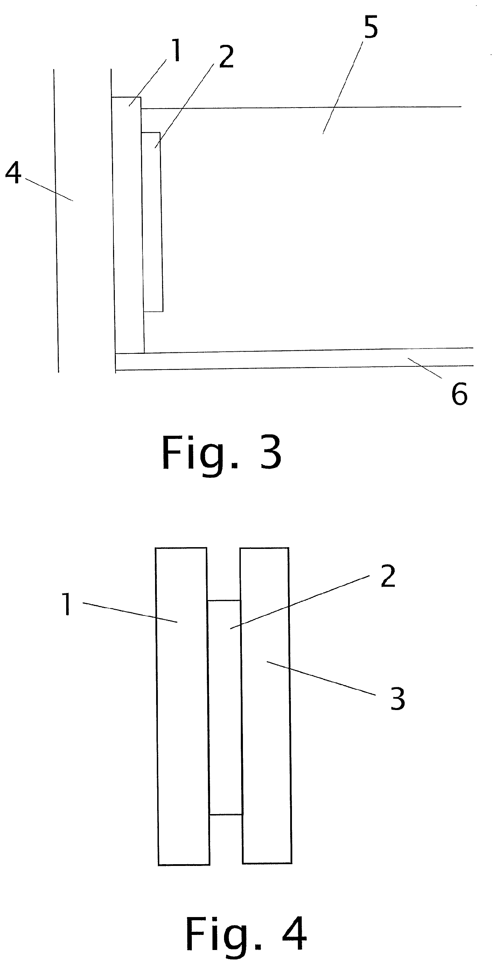

In Fig. 3 ist eine Seitenansicht eines erfindungsgemäßen Dämmstreifens dargestellt. Das Stabilisierungselement 2 ist auf einer Seite der Dämmschicht 1 angeordnet. Um die Funktionsweise des erfindungsgemäßen Dämmstreifens zu illustrieren, ist mit 4 eine schematisch dargestellte Wand bezeichnet und mit 5 eine Estrichschicht. Das aus der Dämmschicht 1 und dem Stabilisierungselement 2 bestehende Dämmstreifen 1 ist zwischen der Wand 4 und der Estrichschicht 5 angeordnet, um zwischen diesen beiden Bereichen eine Dämmung sicherzustellen.

In Fig. 4 ist eine Seitenansicht eines erfindungsgemäßen Dämmstreifens gemäß einer alternativen Ausführung dargestellt. Hier ist das Stabilisierungselement 2 zwischen der Dämmschicht 1 und einer weiteren Dämmschicht 3 angeordnet. Die weitere Dämmschicht 3 kann bspw. gleich groß und aus dem gleichen Material wie die Dämmschicht 1 ausgebildet sein, oder aus einem anderen Material und/oder mit einer anderen Größe.

## Patentansprüche

1. Dämmstreifen, insbesondere für die Dämmung zwischen einer Estrichschicht und einer Wand, umfassend eine Dämmschicht, wobei weiterhin ein mit der Dämmschicht (1) zusammenwirkendes, durchgehend streifenförmiges Stabilisierungselement (2) aus einem plastisch verformbaren Material vorgesehen ist, um den Dämmstreifen in einer vorgegebenen Form zu halten, **dadurch gekennzeichnet, dass** die Breite des Stabilisierungselements (2) 15-75% der Breite der Dämmschicht (1) beträgt.

2. Dämmstreifen nach Anspruch 1, **dadurch gekennzeichnet, dass** das Stabilisierungselement (2) im Wesentlichen aus einem Metall, insbesondere einem nicht gehärteten Metall, bevorzugt Aluminium besteht.

3. Dämmstreifen nach Anspruch 1 oder 2, **dadurch gekennzeichnet, dass** das Stabilisierungselement (2) und die Dämmschicht (1) miteinander verklebt sind oder das Stabilisierungselement (2) auf der Dämmschicht (1) auflaminiert ist.

4. Dämmstreifen nach Anspruch 1, 2 oder 3, **dadurch gekennzeichnet, dass** das Stabilisierungselement (2) innerhalb der Dämmschicht (1) angeordnet ist.

5. Dämmstreifen nach Anspruch 1, 2 oder 3, **dadurch gekennzeichnet, dass** das Stabilisierungselement (2) zwischen der Dämmschicht (1) und einer weiteren Dämmschicht (3) angeordnet ist.

6. Dämmstreifen nach einem der Ansprüche 1 bis 5, **dadurch gekennzeichnet, dass** die Dämmschicht (1) aus einem insbesondere geschäumten Kunststoff, vorzugsweise Polyethylen besteht.

7. Dämmstreifen nach einem der Ansprüche 1 bis 6, **dadurch gekennzeichnet, dass** die Breite des Stabilisierungselements (2) 25-45% der Breite der Dämmschicht (1) beträgt.

8. Dämmstreifen nach einem der Ansprüche 1 bis 7, **dadurch gekennzeichnet, dass** das Stabilisierungselement (2) eine Dicke von 0,3 bis 0,5 mm aufweist.

9. Dämmstreifen nach einem der Ansprüche 1 bis 8, **dadurch gekennzeichnet, dass** das Stabilisierungselement (2) streifenförmig mit einer Breite von 2,5 bis 5 cm ausgebildet ist.

10. Dämmstreifen nach einem der Ansprüche 1 bis 9, **dadurch gekennzeichnet, dass** das Stabilisierungselement (2) so an der Dämmschicht (1) angeordnet ist, das die Dämmschicht (1) in Breitenrichtung zwei, jeweils ausgehend von einem Rand der Dämmschicht (1), von dem Stabilisierungselement (2) freie Bereiche aufweist, wobei die freien Bereiche eine Breite von jeweils zumindest 10%, bevorzugt mindestens 20% der Breite der Dämmschicht (1) aufweisen.

11. Verfahren zum Aufbringen eines Bodenbelags, insbesondere Estrich, wobei zwischen dem Bodenbelag und einem nicht von dem Bodenbelag zu bedeckenden Bereich, bspw. eine Wand oder eine Öffnung, ein Dämmstreifen, umfassend eine Dämmschicht, vor dem Aufbringen von Estrich angebracht wird, **dadurch gekennzeichnet, dass** die Dämmschicht (1) vor dem Anbringen mit einem plastisch verformbaren, durchgehend streifenförmigen Stabilisierungselement (2) versehen wird, wobei die Breite des Stabilisierungselements (2) 15-75% der Breite der Dämmschicht (1) beträgt.

12. Verwendung eines Dämmstreifens gemäß einem der Ansprüche 1 bis 10 zur Schalldämmung zwischen einem Bodenbelag, insbesondere einer Estrichschicht (5) und einem nicht vom Bodenbelag zu bedeckenden Bereich, bspw. einer Wand (4) oder einer Öffnung.

## Claims

1. Insulation strips, especially for the insulation between a layer of screed and a wall, enclosing one layer of insulation, whereby a connected, throughout streaky stabilising element (2) made of a flexibly deformable material is still planned in order to guarantee a predefined form, **characterised by** the fact that the width of the stabilising element (2) is 15 - 75 % of the width of the layer of insulation (1).

2. Insulation strips according to claim 1, **characterised by** the fact that the stabilising element (2) essentially consists of a metal, especially a not hardened metal, preferably aluminium.

3. Insulation strips according to claim 1 or 2, **characterised by** the fact that the stabilising element (2) and the insulation layer (1) are stuck together or the stabilising element (2) is laminated onto the insulation layer (1).

4. Insulation strips according to claim 1, 2 or 3, **characterised by** the fact that the stabilising element (2) is positioned in between the insulation layer (1).

5. Insulation strips according to claim 1, 2 or 3, **characterised by** the fact that the stabilising element (2) is positioned between the insulation layer (1) and another insulation layer (3).

6. Insulation strips according to one of the claims 1 - 5, **characterised by** the fact that the insulation layer (1) consists of an especially foamed synthetic material, preferably polyethylene.

7. Insulation strips according to one of the claims 1 - 6, **characterised by** the fact that the width of the stabilising element (2) is 25 - 45 % of the width of the insulation layer (1).

8. Insulation strips according to one of the claims 1 - 7, **characterised by** the fact that the stabilising element (2) is between 0,3 mm to 0,5 mm thick.

9. Insulation strips according to one of the claims 1 -8, **characterised by** the fact that the stabilising element (2) is in stripes with a width of 2,5 to 5 cm.

10. Insulation strips according to one of the claims 1 - 9, **characterised by** the fact that the stabilising element (2) is positioned at the insulation layer (1) in a way that the insulation layer (1) positioned across the width, has 2 - in each case, commencing from one edge of the insulation layer (1), of the stabilising element (2) free areas, whereby the free areas have each a width of at least 10 %, preferably at least 20 % of the width of the insulation layer.

11. Methods for installing floor covering, especially screed, whereby between the floor covering and an area not to be covered by floor covering, e.g. a wall or an opening, an insulation strip enclosing one layer of insulation, is fixed before the laying of screed, **characterised by** the fact that the lull length of the layer of insulation (1) before being affixed will be fitted with a flexibly deformable, stabilising element (2) in stipes, whereby the stabilising element (2) is 15 - 75 % of the width of the insulation layer (1).

12. Usage of an insulation strip according to one of the claims 1 to 10 for sound insulation between floor covering, especially a layer of screed (5) and an area not to be covered by floor covering, e. g. a wall (4) or opening.

## Revendications

1. Bande isolante, comprenant en particulier la couche isolante2, est entre une chape de béton et un mur, en outre un élément de stabilisation(2) en matière plastique déformable en forme de bande est prévu, coopérant avec la couche isolante(1) pour garder la forme déterminée de la bande isolante **caractérisée par** :
La largeur d'élément de stabilisation (2) de15 à 75% de la largeur de la couche isolante(1) .

2. Bande isolante selon la revendication 1 **caractérisée par** l'élément de stabilisation (2)
Constitué particulièrement d'un métal non durci, mais en Aluminium .

3. Bande isolante selon les revendications 1 ou 2 **caractérisée par** la couche isolante(1) et
l'élément de stabilisation(2)) sont collés ou bien par le laminage d'élément de Stabilisation(2) sur la couche isolante(1).

4. Bande isolante selon les revendications 1,2 ou 3 **caractérisée par** la disposition ou
l'application d'élément de stabilisation(2) dans la couche isolante(1).

5. Bande isolante selon les revendications 1,2 ou 3 **caractérisée par** l'application ou la
dispositions d'élément de stabilisation (2) entre la couche isolante (1) et une autre couche (3).

6. Bande isolante selon une des revendications 1 jusqu'à 5 **caractérisée par** une couche isolante (1) en matière plastique moussée de préférence en polyéthylène.

7. Bande isolante selon une des revendications 1 jusqu'à 6 **caractérisée par** la largeur d'élément
de stabilisation (2) de 25 à 45% de la largeur de la couche isolante (1).

8. Bande isolante selon une des revendications 1 jusqu'à 7 **caractérisée par** l'élément de
Stabilisation (2) ayant une épaisseur de 0,3 à 0,5 mm.

9. Bande isolante selon une des revendications 1 jusqu'à 8 **caractérisée par** l'élément de
Stabilisation (2) en forme de bande ayant une largeur de 2,5 à 5 cm.

10. Bande isolante selon une des revendications 1 jusqu'à 9 **caractérisée par** un élément de
stabilisation (2) disposé dans la couche isolante(1) contenant des zones libres par apport à cet
2 éléments, dans les deux sens de la largeur à partir de chaque bord de la couche.
Les zones libres contiennent une largeur d'au moins 10% de préférence au moins 20% de la
largeur de la couche(1)

11. Procédure de l'application de revêtement du sol, en particulier la chape de béton où une bande
isolante comprenant une couche isolante sera mise en place avant la disposition de la chape de
béton, entre le revêtement du sol et une zone ouverte, un mur ou un ajour(ouverture)
Cette chape de béton est **caractérisée par** la mise en place de la couche isolante(1) avant
l'application de l'élément de stabilisation(2) qui est en plastique déformable et aussi en forme de
bande. Ce dernier fait une largeur de 15 à 75% de la largeur de la couche isolante(2)

12. L'utilisation d'une bande isolante selon une des revendications 1 jusqu'à 10 pour une isolation
acoustique, entre le revêtement du sol ,en particulier la chape de béton(5) et une zone libre de
revêtement du sol (ouverte) comme par exemple un mur (4) ou une ouverture.
